# FASCICULE DE BREVET EUROPEEN

(11) **EP 3 256 294 B1**
(45) Date de publication et mention de la délivrance du brevet: **19.12.2018**
(21) Numéro de dépôt: 16705062.4
(22) Date de dépôt: 08.02.2016
(51) Int. Cl.: B25J 21/02, B01L 1/04, G21F 7/04, G21F 7/005

(54) **ENCEINTE DE CONFINEMENT AYANT DEUX POSITIONS FERMEES DISTINCTES**
EINSCHLUSSGEHÄUSE MIT ZWEI VERSCHIEDENEN GESCHLOSSENEN POSITIONEN
CONTAINMENT ENCLOSURE HAVING TWO DISTINCT CLOSED POSITIONS

(30) Priorité: 09.02.2015 FR 1551004
(43) Date de publication de la demande: 20.12.2017
(73) Titulaire: Getinge La Calhene, 41100 Vendôme (FR)
(72) Inventeur: GOULAY, Pascal, 41100 Crucheray (FR); COCHARD, Pascal, 37150 Dierre (FR)
(74) Mandataire: Brevalex
(86) Numéro de dépôt international: PCT/EP2016/052624
(87) Numéro de publication internationale: WO 2016/128352

(56) Documents cités:
- WO-A2-02/074504
- CN-U- 202 380 909
- GB-A- 2 182 702
- GB-A- 2 224 061

## Description

### DOMAINE TECHNIQUE

L'invention concerne les isolateurs habituellement utilisés en production ou en recherche pharmaceutique et en pharmacie hospitalière. Ces enceintes étanches et confinées permettent une protection croisée personnel/produits vis-à-vis des contaminations chimiques et microbiologiques sans compromettre l'environnement.

### ÉTAT DE LA TECHNIQUE ANTÉRIEURE

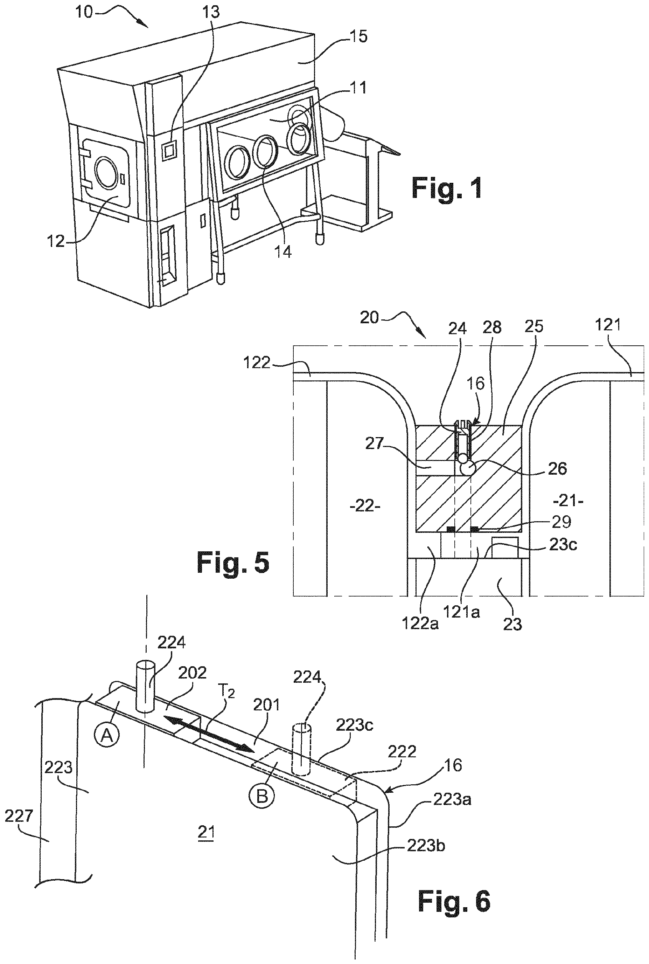

L'isolateur 10 représenté à la figure 1 comporte les différents sous-ensembles suivants : un poste de travail 11, un système de transfert ou sas 12, un système de contrôle 13, un système de manipulation 14 telle qu'une boîte à gants, un système de ventilation ou de filtration 15.

Des éléments de fermeture amovibles reliés à la paroi d'enceinte par un de leurs côtés, tels que des portes rectangulaires, et associés à des dispositifs tels que des joints gonflables y maintiennent l'étanchéité entre :
- le sas et l'extérieur, d'une part,
- le sas et la zone de travail, d'autre part.

L'introduction de matériels ou de composants via le sas suit par exemple les étapes consécutives suivantes :
- chargement d'un chariot avec les composants à transférer,
- introduction du chariot dans le sas via l'ouverture de la première porte séparant le sas de l'extérieur, la seconde porte séparant le sas de la zone de travail étant fermée,
- bio-décontamination du sas et de son contenu après fermeture de la première porte,
- ouverture de la seconde porte et transfert du chariot avec ses composants,
- évacuation du chariot vide dans le sas, fermeture de la seconde porte,
- ouverture de la première porte, récupération du chariot et préparation d'un nouveau chargement.

WO 02/074504 A2 divulgue un autre exemple d'enceinte de confinement comportant un caroussel étanche de chargement entre deux compartiments.

L'invention a pour objet d'offrir un isolateur de volume réduit et d'utilisation simplifiée par rapport aux techniques connues, tout en offrant une interface d'étanchéité satisfaisante pour séparer le sas et la zone de travail.

### EXPOSÉ DE L'INVENTION

Ainsi, l'invention porte sur une enceinte de confinement comportant un premier compartiment, un deuxième compartiment et un système d'étanchéité entre les deux compartiments. Le système d'étanchéité comprend une porte ayant une première face et une deuxième face opposée à la première face. La porte comporte un support de transfert sur la première face.

Selon l'invention, la porte est configurée pour admettre une première position fermée et une deuxième position fermée, distinctes l'une de l'autre. La première face participe à la délimitation du premier compartiment dans la première position fermée. La première face participe à la délimitation du deuxième compartiment dans la deuxième position fermée.

Cette structure de porte présente les avantages suivants.

Elle facilite le transfert de produit d'un compartiment à l'autre. Elle offre notamment la possibilité de se dispenser de charriot pour transférer des produits d'un compartiment à l'autre.

Elle permet également de réduire l'encombrement nécessaire à l'ouverture de la porte et donc le volume de l'un des compartiments, par exemple un sas de transfert, et donc d'en permettre une décontamination plus rapide.

L'enceinte de confinement comporte par ailleurs une interface d'étanchéité satisfaisante pour séparer le sas de la zone de travail.

Autrement dit, l'enceinte comporte une interface d'étanchéité entre deux volumes, l'interface comportant une porte logée dans un cadre, par exemple formé par au moins un rebord de l'une des enveloppes délimitant chaque volume, la porte comportant deux faces, au moins l'une des faces étant munie d'un moyen formant support, l'interface admettant deux états fermés distincts dans lesquels la porte est disposée de manière étanche aux gaz dans le cadre, et le moyen formant support est disposé d'un côté respectif du cadre selon que l'interface est dans le premier ou le deuxième état fermé.

Dans une de ses positions fermées, une face de la porte est tournée vers un premier compartiment, tandis que l'autre face de la porte est tournée vers l'autre des compartiments. C'est l'inverse dans l'autre position fermée.

Avantageusement, le support de transfert est disposé dans un premier des compartiments dans une première position fermée de la porte, et dans un deuxième des compartiments dans une deuxième position fermée.

Avantageusement, la porte comporte un support de transfert sur chacune de ses faces. Cette structure permet d'accélérer l'acheminement de produits vers le poste de travail, la récupération de produits utilisés depuis celui-ci et la décontamination du sas.

Avantageusement, la porte est montée pivotante autour d'un axe vertical. Ces caractéristiques permettent de limiter l'effort à fournir par l'utilisateur au maximum du fait que les poids de l'organe de transfert et des produits à transférer sont supportés par l'axe de la porte, contrairement aux chariots connus de l'art antérieur.

Dans une configuration particulière, l'axe vertical passe par le milieu des bords inférieur et supérieur de la porte. Cette configuration a l'avantage d'offrir une distance d'accès constante depuis l'un des compartiments, par exemple depuis un système de manipulation disposé dans l'un des volumes.

L'axe vertical peut alors relier directement la porte à un cadre dans laquelle la porte est logée dans l'une ou l'autre de ses positions fermées, le cadre étant par exemple formé d'un rebord de l'enveloppe de l'un des compartiments. Cette solution est particulièrement simple et économe.

La porte peut aussi être montée pivotante sur une armature support, l'armature support étant elle-même montée pivotante sur une paroi de l'enceinte de confinement, par exemple hors d'un plan d'étanchéité défini par un joint d'étanchéité. Cette armature est par exemple un bras qui, grâce à ce système à deux pivots, se déplace à l'intérieur de l'un des compartiments, par exemple le sas, lors de la manipulation de la porte. Cette structure particulière permet un volume de chargement plus important et limite encore l'encombrement nécessaire à l'ouverture de la porte dans l'un des compartiments, par exemple le poste de travail.

Dans une autre configuration, la porte comporte une rainure en un bord supérieur ou inférieur, une navette montée coulissante dans la rainure, la navette étant montée pivotante par rapport à l'enceinte de confinement. Cette structure offre un degré supplémentaire de coulissement sur la navette et permet d'accéder facilement à toute la surface de la porte lorsque celle-ci est ouverte.

La porte comporte de préférence une rainure sur le bord supérieur et une rainure sur le bord inférieur.

Avantageusement, au moins une butée est prévue pour bloquer la porte dans ses positions fermées.

La butée est préférentiellement isolée de chacun des compartiments par un joint d'étanchéité.

La butée peut être fixe ou escamotable. Une butée fixe est une solution simple et peu coûteuse. Une butée amovible permet une manipulation particulièrement aisée de la porte, celle-ci pouvant tourner dans un sens indifférent depuis l'une quelconque de ses positions fermées.

L'invention porte encore sur un procédé de transfert d'un chargement entre deux compartiments d'une enceinte de confinement telle que décrite ci-dessus, comportant l'étape de déplacement de la porte depuis une première position fermée vers une deuxième position fermée. Le déplacement de la porte entre ses deux positions fermées peut être accompagné du retrait d'un chargement depuis l'une ou depuis chacune des faces de la porte et/ou du dépôt d'un chargement sur l'une ou sur chacune des faces de la porte. Avantageusement, une étape de chargement et/ou une étape de déchargement d'au moins une charge sur ou dans ledit support de transfert est prévue préalablement ou postérieurement à l'étape de déplacement de la porte, le déplacement de la porte amenant le produit de l'un à l'autre des deux compartiments.

### BRÈVE DESCRIPTION DES DESSINS

On décrira à présent, à titre d'exemples non limitatifs, des modes de réalisation de l'invention, en se référant aux dessins annexés, dans lesquels :
- la figure 1 est une vue en perspective d'un isolateur existant, tel que décrit en préambule ;
- les figures 2a et 2b sont des vues en perspective d'un premier mode de réalisation d'une porte selon l'invention ;
- les figures 3a et 3b sont des vues en perspective d'un deuxième mode de réalisation de porte selon l'invention ;
- les figures 4a à 4c sont des vues en plan, de dessous de différentes positions atteintes par la porte selon le deuxième mode de réalisation ; et,
- la figure 5 est une vue en coupe d'une butée formée sur un axe de rotation du premier mode de réalisation de la porte ;
- la figure 6 est une vue partielle d'un troisième mode de réalisation de porte d'étanchéité selon l'invention.

### EXPOSÉ DÉTAILLÉ DE MODES DE RÉALISATION PARTICULIERS

L'isolateur 20 ou enceinte de confinement selon l'invention comporte deux volumes principaux : un poste de travail 21 (ou volume d'utilisation ou premier compartiment d'utilisation), un sas 22 (ou volume de transfert ou deuxième compartiment de transfert) et un système d'étanchéité 16.

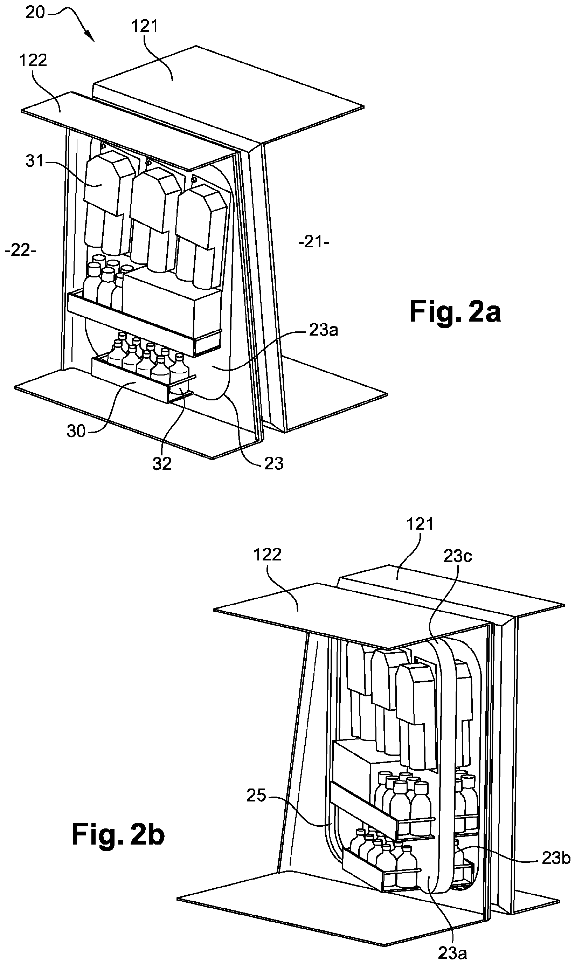

Dans un premier mode de réalisation illustré en figures 2a et 2b, le système d'étanchéité 16 comporte une porte 23 et un cadre externe fixe 25.

La porte 23 est montée mobile en pivotement à l'interface entre l'enveloppe 121 délimitant le poste de travail 21 et l'enveloppe 122 délimitant le sas 22.

Ici, la porte 23 comporte une tige 24 formant axe de pivot (figure 5). La tige 24 est montée solidaire, verticale et au milieu du bord supérieur 23c de la porte 23. La tige 24 est logée mobile en pivotement dans un logement 28 correspondant du cadre 25 et/ou de l'une ou l'autre ou des deux enveloppes 121 et 122, par exemple ici à travers le rebord 121a de l'enveloppe 121 (ou en variante non représentée à travers un rebord 122a de l'enveloppe 122). Une tige analogue à la tige 24 et formant axe de pivot peut être prévue sur le bord inférieur de la porte 23. D'autres moyens formant axe de pivot peuvent être prévus, par exemple un axe solidaire de l'une ou l'autre des enveloppes 121 et 122 et monté mobile en pivotement dans un logement que comporte la porte 23, ou encore un axe mobile en pivotement à la fois par rapport aux enveloppes 121 et 122 et la porte 23.

Un joint d'étanchéité 29 est disposé ici autour de la tige 24, entre le cadre 25 et le rebord 121a.

Sur chacune de ses faces 23a et 23b (figure 2b), la porte 23 est pourvue de moyens formant supports 30, encore appelés supports de transfert, prévus pour recevoir un chargement ou une charge comportant divers produits ou matériaux, tels que les outils 31 ou les flacons 32 devant être transférés du poste de travail 21 au sas 22 ou inversement. Les supports 30 peuvent comporter des étagères, des crochets, des paniers ou tout autre organe permettant le maintien de produits à transférer sur l'une des deux faces 23a/23b. Les supports 30 peuvent encore comporter des arceaux sur lesquels au moins un élément amovible, tel qu'une étagère ou un panier, est crochetable.

En figure 2a, la porte 23 se trouve dans une première position fermée, chargée des produits 31 et 32 sur sa face 23a, par exemple préalablement au transfert depuis le sas 22 vers le poste de travail 21. La face 23a se trouve alors côté sas 22.

En figure 2b, la porte 23 se trouve dans une position ouverte, intermédiaire entre la première position fermée de la figure 2a et une deuxième position fermée non illustrée dans laquelle la face 23a se trouve côté poste de travail 21, c'est-à-dire pivotée à 180° par rapport à la première position fermée.

Dans la première comme dans la deuxième position fermée, la porte 23 scelle l'interface entre les volumes 21 et 22 hermétiquement à l'air et aux particules, et donc par exemple aux germes.

La porte 23 assure donc un double rôle :
- elle sépare de manière étanche le sas 22 et le poste de travail 21 ;
- elle supporte les produits ou outils à transférer d'un volume à l'autre (du poste de travail 21 vers sas 22 et/ou inversement).

La porte 23 peut tourner autour d'un pivot vertical et central. Cette rotation permet d'inverser l'accès aux deux faces 23a et 23b de la porte 23 depuis l'un ou l'autre des volumes 21 et 22. Autrement dit, la porte 23 permet d'évacuer des produits utilisés du type des charges 31 ou 32 depuis le volume d'utilisation 21 vers le volume de transfert 22, et, dans un même temps, d'acheminer de nouveaux produits depuis le sas 22 vers le volume d'utilisation 21.

Tel qu'illustré en figure 5, une butée fixe 26 est prévue pour arrêter la rotation de la porte en chacune de ses positions fermées. Ici, la butée 26 est un pion ménagée sur la tige 24 de pivot et transversal ou perpendiculaire à celui-ci. Un logement horizontal 27 est ménagé dans le cadre 25. Lorsque la porte 23 est pivotée entre ses positions fermées, la butée 26 vient en contact en fond de logement 27 ou contre une surface fixe non représentée de l'isolateur 20 et/ou de l'une des enveloppes.

En variante, au moins une butée rétractable, non illustrée, peut remplacer la butée 26. Une telle butée permet de faire tourner la porte 23 dans un sens de rotation indifférent depuis chacune de ses positions fermées. Cette butée rétractable peut par exemple se rétracter lorsqu'un utilisateur applique sur la porte 23 une force de poussée supérieure à un seuil donné.

Chaque butée, fixe 26 ou rétractable, est préférentiellement isolée des volumes d'utilisation 21 et de transfert 22 par le joint d'étanchéité 29. Ceci permet de limiter le nombre de pièces dans ces volumes 21 et 22 et donc d'en faciliter la décontamination.

Les structures de butée décrites ci-dessus ne sont pas limitatives.

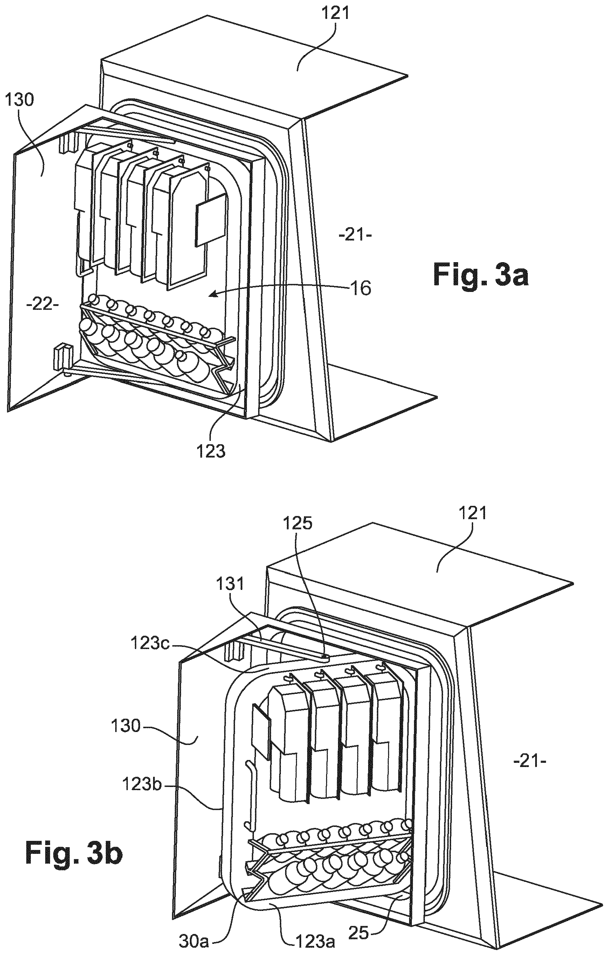

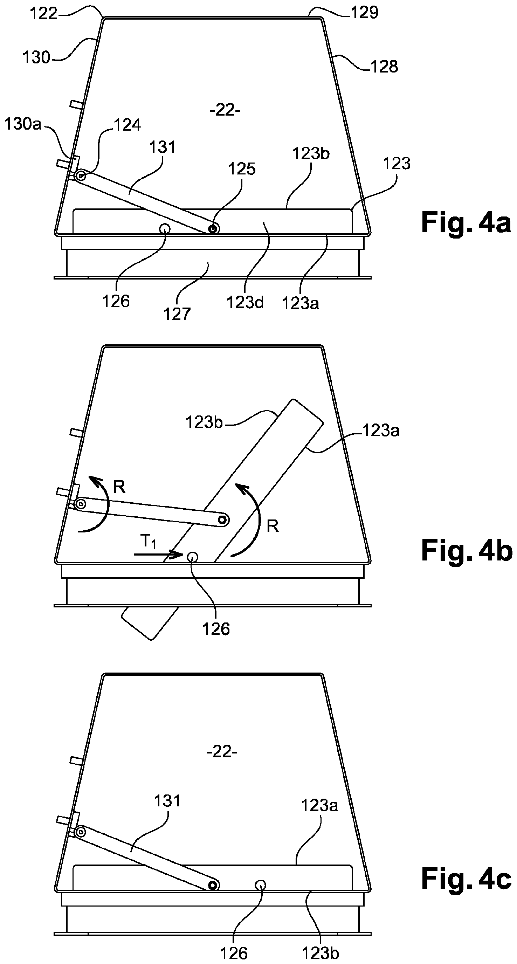

Dans un deuxième mode de réalisation illustré en figures 3a, 3b et 4a à 4c, le système d'étanchéité 16 comporte une porte 123 et un cadre 127 dans lequel la porte 123 est logée dans ses positions fermées.

A la différence de la porte 23, la porte 123 est montée dans l'isolateur 20 par l'intermédiaire d'une paroi 130 et de bras 131 (encore appelés armatures ou portants). La paroi 130 peut par exemple faire partie de l'enveloppe 122 du sas 22 (figure 4a).

Chaque bras 131 est monté à ses deux extrémités par un pivot 124 ou 125 contre respectivement un support 130a solidaire de la paroi 130 ou contre la face supérieure 123c ou inférieure 123d de la porte 123.

La porte 123 peut ainsi se déporter dans le volume de transfert 22 lors de sa transition entre une première position fermée (figure 4a) et une deuxième position fermée (figure 4c).

Un pion de guidage en translation 126 est disposé sur l'une ou l'autre des surfaces 123c et 123d, ou sur les deux.

Une rainure correspondante (non illustrée) est prévue par exemple sur ou contre le cadre 127. Le cadre 127 est par exemple formé des rebords 121a et 122a. Ainsi, lorsque la porte 123 est manipulée pour passer de l'une à l'autre de ses positions fermées, le pion 126 coulisse dans la rainure selon une orientation T1, assurant ainsi le pivotement R du bras 131 et de la porte 123 selon une course maîtrisée (figure 4b).

Dans un troisième mode de réalisation représenté en figure 6, le système d'étanchéité 16 comporte une porte 223 et un cadre fixe 227 dans lequel la porte 223 est logée dans chacune de ses positions fermées. Le cadre 227 peut par exemple faire partie de l'enveloppe 121 ou 122 délimitant l'un ou l'autre des volumes 21 et 22.

La porte 223 est pourvue d'une rainure 201 sur chacun de ses bords supérieur 223c et inférieur (non représenté). La porte 223 comporte en outre deux navettes 202.

Chaque navette 202 est montée coulissante selon une direction T2 dans l'une des rainures 201. Par exemple en figure 6, chaque navette 202 peut coulisser dans sa rainure 201 entre une première position extrême A (illustrée en traits continus) et une deuxième position extrême B (en traits interrompus).

Une tige 224 formant pivot est montée solidaire de chaque navette 202. La tige 224 est logée dans le cadre fixe 227.

La porte 223 peut ainsi coulisser sur sa largeur par rapport au cadre 227 de manière à un meilleur guidage du mouvement de la porte, ce qui facilite l'accès aux supports de transfert 30 depuis l'un ou l'autre des volumes 21 et 22.

Dans ce mode de réalisation, le pivot 224 est excentré, c'est-à-dire en une position différente du milieu du bord supérieur 223c. Alternativement, le pivot 224 peut être prévu centré sur le bord supérieur 223c.

Le déplacement de la porte 223 depuis une première position fermée, par exemple dans laquelle la face 223a est tournée vers le volume 22 tel qu'illustré en figure 6, vers une deuxième position fermée dans laquelle la face 223a est tournée vers le volume 21, par exemple dans laquelle la face 223a est tournée vers le volume 21, est décrit ci-après.

Le déplacement de la porte 223 comporte les étapes d'ouverture, de pivotement par rapport à un cadre, de coulissement de la porte 223 par rapport à la navette 224 et enfin de fermeture. Les étapes de coulissement et de pivotement peuvent être réalisées simultanément pour simplifier le réglage de l'orientation de la porte 223. Alternativement, les étapes de pivotement et de coulissement peuvent être réalisées distinctement, par exemple :
- en faisant pivoter la porte 223 à 90° de sa première position fermée, chaque navette 201 étant par exemple dans sa première position extrême A relativement à la porte 223 ;
- en faisant coulisser la porte 223 sur ses navettes 201, par exemple de sorte que chaque navette 201 se retrouve dans sa deuxième position extrême B par rapport à la porte 223 ;
- en faisant pivoter la porte 223 à 90° vers la deuxième position fermée.

Les supports 30 ou la butée fixe 26 ou une butée rétractable tels que décrits en référence au premier mode de réalisation sont transposables aux deux autres modes de réalisation.

Dans les modes de réalisation décrits ci-dessus, il est ainsi possible de déplacer la porte 23, 123 ou 223 d'une première position fermée vers une deuxième position fermée par un pivotement, éventuellement accompagné d'un coulissement, pour le transfert d'une charge depuis au moins un volume 21 ou 22 vers au moins l'autre.

Chacune des portes 23, 123, 223 peut comporter une zone transparente permettant de visualiser l'état du chargement de la porte depuis l'enceinte de confinement de l'isolateur.

L'invention peut trouver une application en production ou en laboratoire pharmaceutique, en pharmacie hospitalière et/ou en laboratoire.

L'invention peut également trouver une application dans d'autres domaines tels que l'industrie agroalimentaire ou l'industrie nucléaire.

## Revendications

1. Enceinte de confinement comportant un premier compartiment (21), un deuxième compartiment (22) et un système d'étanchéité entre les deux compartiments,
le système d'étanchéité (16; 23, 30; 123; 223) comportant une porte (23 ; 123 ; 223) ayant une première face (23a, 123a, 223a) et une deuxième face (23b, 123b, 223b) opposée à la première face,
la porte comportant au moins un support de transfert (30) sur la première face (23a, 123a, 223a),
la porte étant configurée pour admettre une première position fermée et une deuxième position fermée, distinctes l'une de l'autre, la première face (23a, 123a, 223a) participant respectivement à la délimitation du premier compartiment (21) dans la première position fermée, à la délimitation du deuxième compartiment (22) dans la deuxième position fermée,
la porte (23, 123, 223) formant une interface étanche aux gaz entre les deux compartiments (21, 22) dans la première et dans la deuxième position fermée.

2. Enceinte de confinement selon la revendication 1, le support de transfert étant disposé dans le premier compartiment dans la première position fermée, et dans le deuxième compartiment dans la deuxième position fermée.

3. Enceinte de confinement selon l'une des revendications précédentes, la porte comportant un support de transfert sur chacune de ses faces.

4. Enceinte de confinement selon l'une des revendications précédentes, la porte étant montée pivotante autour d'un axe vertical (24, 124) passant par le milieu de ses bords inférieur et supérieur.

5. Enceinte de confinement selon l'une des revendications précédentes, la porte étant montée pivotante sur un support (131), le support étant lui-même monté pivotant sur une paroi (130a, 130) de l'enceinte de confinement.

6. Enceinte de confinement selon l'une des revendications 1 à 3, la porte comportant une rainure en un bord supérieur ou inférieur, une navette montée coulissante dans la rainure, la navette étant montée pivotante par rapport à l'enceinte de confinement.

7. Enceinte de confinement selon l'une des revendications précédentes, au moins une butée étant prévue pour bloquer la porte dans ses positions fermées.

8. Enceinte de confinement selon la revendication précédente, la butée étant isolée de chacun des compartiments par un joint d'étanchéité.

9. Enceinte de confinement selon l'une des revendications 7 ou 8, la butée étant fixe.

10. Enceinte de confinement selon l'une des revendications 7 ou 8, la butée étant escamotable.

11. Procédé de transfert d'un chargement entre deux compartiments d'une enceinte de confinement selon l'une des revendications 1 à 10, comportant l'étape de déplacement de la porte (23 ; 123 ; 223) depuis la première position fermée vers la deuxième position fermée.

12. Procédé selon la revendication 11, comportant une étape de chargement d'au moins une charge (31, 32) sur ou dans ledit support de transfert (30) préalablement à l'étape de déplacement de la porte (23 ; 123 ; 223), le déplacement de la porte (23 ; 123 ; 223) amenant le produit de l'un à l'autre des deux compartiments (21, 22).

## Patentansprüche

1. Einschlussgehäuse, umfassend einen ersten Raum (21), einen zweiten Raum (22) und ein Dichtungssystem zwischen den beiden Räumen, wobei das Dichtungssystem (18; 23, 30; 123; 223) eine Tür (23; 123; 223) umfasst, die eine erste Seite (23a, 123a, 223a) und eine zweite Seite (23b, 123b, 223b) entgegengesetzt zur ersten Seite aufweist, wobei die Tür mindestens einen Übergabeträger (30) auf der ersten Seite (23a, 123a, 223a) umfasst, wobei die Tür so gestaltet ist, dass sie eine erste geschlossene Position und eine zweite geschlossene Position, die voneinander verschieden sind, zulässt, wobei die erste Seite (23a, 123a, 223a) jeweils zur Begrenzung des ersten Raums (21) in der ersten geschlossenen Position, zur Begrenzung des zweiten Raums (22) in der zweiten geschlossenen Position beiträgt, wobei die Tür (23, 123, 223) eine gasdichte Grenzfläche zwischen den beiden Räumen (21, 22) in der ersten und in der zweiten geschlossenen Position bildet.

2. Einschlussgehäuse nach Anspruch 1, wobei der Übergabeträger in der ersten geschlossenen Position in dem ersten Raum und in der zweiten geschlossenen Position in dem zweiten Raum angeordnet ist.

3. Einschlussgehäuse nach einem der vorhergehenden Ansprüche, wobei die Tür einen Übergabeträger auf jeder ihrer Seiten aufweist.

4. Einschlussgehäuse nach einem der vorhergehenden Ansprüche, wobei die Tür schwenkbar um eine senkrechte Achse (24, 124) gelagert ist, die durch den Mittelpunkt ihrer oberen und unteren Kanten verläuft.

5. Einschlussgehäuse nach einem der vorhergehenden Ansprüche, wobei die Tür schwenkbar an einem Träger (131) gelagert ist, wobei der Träger selbst schwenkbar an einer Wand (130a, 130) des Einschlussgehäuses gelagert ist.

6. Einschlussgehäuse nach einem der Ansprüche 1 bis 3, wobei die Tür eine Nut an einer oberen oder unteren Kante aufweist, wobei ein Schiffchen verschiebbar in der Nut gelagert ist, wobei das Schiffchen schwenkbar in Bezug auf das Einschlussgehäuse gelagert ist.

7. Einschlussgehäuse nach einem der vorhergehenden Ansprüche, wobei mindestens ein Anschlag vorgesehen ist, um die Tür in ihren geschlossenen Positionen zu arretieren.

8. Einschlussgehäuse nach dem vorhergehenden Anspruch, wobei der Anschlag von jedem der Räume durch eine Dichtung isoliert ist.

9. Einschlussgehäuse nach einem der Ansprüche 7 oder 8, wobei der Anschlag feststehend ist.

10. Einschlussgehäuse nach einem der Ansprüche 7 oder 8, wobei der Anschlag versenkbar ist.

11. Verfahren zur Übergabe einer Ladung zwischen zwei Räumen eines Einschlussgehäuses nach einem der Ansprüche 1 bis 10, umfassend den Schritt des Verlagerns der Tür (23; 123; 223) aus der ersten geschlossenen Position in die zweite geschlossene Position.

12. Verfahren nach Anspruch 11, umfassend einen Schritt des Ladens mindestens einer Ladung (31, 32) auf oder in den Übergabeträger (30) vor dem Schritt des Verlagerns der Tür (23; 123; 223), wobei das Verlagern der Tür (23; 123; 223) das Produkt aus dem einen in den anderen der beiden Räume (21, 22) bringt.

## Claims

1. A containment enclosure including a first compartment (21), a second compartment (22) and a sealing system between both compartments,
the sealing system (16; 23, 30; 123; 223) including a door (23; 123; 223) having a first face (23a, 123a, 223a) and a second face (23b, 123b, 223b) opposite to the first face,
the door including at least one transfer support (30) on the first face (23a, 123a, 223a),
the door being configured to have a first closed position and a second closed position, distinct from each other, the first face (23a, 123a, 223a) respectively participating in delimiting the first compartment (21) in the first closed position, in delimiting the second compartment (22) in the second closed position,
the door (23, 123, 223) forming a gas tight interface between both compartments (21, 22) in the first and in the second closed position.

2. The containment enclosure according to claim 1, wherein the transfer support is located in the first compartment in the first closed position, and in the second compartment in the second closed position.

3. The containment enclosure according to one of the preceding claims, wherein the door includes a transfer support on each of its faces.

4. The containment enclosure according to one of the preceding claims, wherein the door is pivotably mounted about a vertical axis (24, 124) passing through the middle of its lower and upper edges.

5. The containment enclosure according to one of the preceding claims, wherein the door is pivotably mounted to a support (131), the support being itself pivotably mounted to a wall (130a, 130) of the containment enclosure.

6. The containment enclosure according to one of claims 1 to 3, wherein the door includes a groove in an upper or lower edge, a shuttle slidably mounted in the groove, the shuttle being pivotably mounted relative to the containment enclosure.

7. The containment enclosure according to one of the preceding claims, wherein at least one abutment is provided to block the door in its closed positions.

8. The containment enclosure according to the preceding claim, wherein the abutment is insulated from each of the compartments by a seal.

9. The containment enclosure according to one of claims 7 or 8, wherein the abutment is fixed.

10. The containment enclosure according to one of claims 7 or 8, wherein the abutment is retractable.

11. A method for transferring a loading between two compartments of a containment enclosure according to one of claims 1 to 10, including the step of moving the door (23; 123; 223) from the first closed position to the second closed position.

12. The method according to claim 11, including a step of loading at least one load (31, 32) onto or into said transfer support (30) prior to the step of moving the door (23; 123; 223), the movement of the door (23; 123; 223) bringing the product from one of both compartments (21, 22) to the other.
